# NEUE EUROPÄISCHE PATENTSCHRIFT

(11) **EP 2 302 841 B2**
(45) Veröffentlichungstag und Bekanntmachung des Hinweises auf die Entscheidung über den Einspruch: **09.05.2018**
(45) Hinweis auf die Patenterteilung: 18.01.2012
(21) Anmeldenummer: 10009765.8
(22) Anmeldetag: 17.09.2010
(51) Int. Cl.: H04L 12/403, H04L 12/46, G05B 19/00, H04L 12/701

(54) **Vorrichtung zur sicherheitsgerichteten Kommunikation im Kommunikations-Netzwerk einer Automatisierungs-Anlage**
Device for secure communication in the communication network of an automation assembly
Dispositif de communication orientée vers la sécurité dans le réseau de communication d'une installation d'automatisation

(30) Priorität: 23.09.2009 DE 102009042354
(43) Veröffentlichungstag der Anmeldung: 30.03.2011
(73) Patentinhaber: Phoenix Contact GmbH & Co. KG, 32825 Blomberg (DE)
(72) Erfinder: Schmidt, Jochen, 31812 Bad Pyrmont (DE); Horn, Steffen, 32825 Blomberg (DE)
(74) Vertreter: Schmidt, Oliver

(56) Entgegenhaltungen:
- EP-A2- 1 533 673
- EP-A2- 1 923 759

## Beschreibung

Die Erfindung betrifft allgemein Automatisierungs-Anlagen und deren Automatisierungs-Bussysteme. Im Speziellen betrifft die Erfindung die Kommunikation zwischen sicherheitsgericheten Modulen im Kommunikations-Netzwerk einer solchen Automatisierungs-Anlage.

Zur Reduzierung eines Risikos für Mensch oder Umwelt ist es häufig erforderlich, Sicherheitsfunktionen in Automatisierungs-Bussystemen, beziehungsweise den daran angeschlossenen Teilnehmern vorzusehen. Ein Beispiel ist die Abschaltung einer an das Automatisierungs-Bussystem angeschlossenen Maschine nach der Betätigung eines Not-Aus-Schalters. Zu diesem Zweck werden zunehmend fehlersichere Automatisierungssysteme eingesetzt. Im Allgemeinen realisieren diese fehlersicheren Automatisierungssysteme einerseits die eigentliche Sicherheitsfunktion, wie zum Beispiel Zweihand-Schaltung, Muting, Betriebsarten-Wahlschalter, usw., und andererseits auch fehlererkennende und fehlerbeherrschende Massnahmen, wie sie zum Beispiel in den Standards IEC 61508 und ISO13849 festgelegt sind.

In derzeitigen Automatisierungs-Systemen werden abhängig vom Automatisierungsgrad und von der Ausdehnung der Anlagen Kommunikationssysteme verwendet, die dezentrale Eingabe-/Ausgabe-Geräte (E/AGeräte) und Steuerungen verbinden. Für den Transport von sicherheitstechnischen Daten ist es dabei bekannt, das Netzwerk durch sichere Netzwerkprotokolle zu unterstützen. Der verwendete Signalfluss geht bisher von einer zentralen Sicherheitstechnik aus, in der die sicheren Eingangssignale zur sicheren Steuerung transportiert, dort verarbeitet und dann zu den entsprechenden Aktoren transportiert werden. Die sichere Verarbeitung wird auch als sichere Applikation bezeichnet.

Die Europäische Patentanmeldung EP 1533673 veröffentlicht ein Steuerungssystem zum Steuern von sicherheitskritischen Prozessen mit einer Kommunikation über einen Feldbus.

Fehler in der Kommunikation können in der Hardware und der Firmware der Automatisierungsgeräte, in Infrastrukturkomponenten der Netzwerke, beispielsweise Feldbus- oder Ethernet-Komponenten und während der Datenübertragung durch äußere Einflüsse vorhanden sein oder entstehen. Äußere Einflüsse können beispielsweise Störungen der Datenübertragung durch elektromagnetische Felder sein.

In der Automatisierungstechnik lassen sich derzeit zwei Tendenzen erkennen. Zum einen existieren Bestrebungen, die Steuerungsfunktionen zu dezentralisieren. Weiterhin besteht Interesse an der Integration der Sicherheitstechnik in die Steuerungs- und Netzwerktechnik. Aus der DE 10 2007 050 708 A1 ist ein System zum Betreiben wenigstens eines nicht-sicherheitskritischen und wenigstens eines sicherheitskritischen Prozesses bekannt. Der sichere Applikationsprozess ist gemäß dieser Druckschrift in eine separate Sicherheitssteuerung ausgelagert, welche hinsichtlich der für den sicherheitskritischen Applikationsprozess erforderlichen Kommunikation als sicherheitsbezogene Servereinrichtung ausgebildet ist. Diese verarbeitet die sicherheitsrelevanten Daten, die zur Steuerung des sicherheitskritischen Applikationsprozesses notwendig sind und organisiert die Übertragung der sicherheitsrelevanten Daten über wenigstens eines der Netzwerkelemente und/oder die Mastereinrichtung über das Netzwerk.

Bei der Dezentralisierung wird die Steuerungsfunktion immer weiter in die Ausgangsebene verlagert. So kann zum Beispiel in Antrieben in begrenztem Umfang die Steuerungsfunktion mit integriert werden.

Mit der Integration der Sicherheitstechnik in Steuerungen und Netzwerke werden allerdings starke Abhängigkeiten im Applikationsprozess erzeugt. Diese Abhängigkeiten führen zu einer komplexeren Projektierung und Programmierung der Systeme. Dies steht in gewissem Widerspruch zu dem Wunsch nach einer Einfachheit in der Handhabung der Sicherheitstechnik. Die Komplexität in der Projektierung sicherheitsgerichteter Applikationen ist bisher einer der wesentlichen Gründe dafür, dass der Übergang von konventioneller, fest verdrahteter Sicherheitstechnik, insbesondere auf der Basis von Sicherheitsrelais nur schleppende Akzeptanz findet. Auch kann es bei bisherigen sicheren Automatisierungsbussystemen aufgrund der vorstehend genannten Schwierigkeiten zu fehlerbehafteter Nutzung und mangelnder Verfügbarkeit der gesteuerten Anlage durch sogenannte Fehlauslösungen kommen.

Der Erfindung liegt mithin die Aufgabe zugrunde, die Installation und Projektierung sicherheitsgerichteter Module in einem Automatisierungs-Netzwerk zu vereinfachen.

Eine grundlegende Idee der Erfindung zur Lösung dieser Aufgabe liegt darin die Sicherheitsfunktionen einer Anlage in kleine, überschaubare, lokal begrenzbare und einfach verifizierbare Modulgruppen aufzuteilen. Die Gruppen von Modulen, die zur Ausführung einer sicherheitsgerichteten Aktion vorgesehen sind, stellen somit mehr oder weniger autarke Inseln innerhalb des gesamten Kommunikations-Netzwerks dar.

Diese Architektur entspricht der Denkweise der heute mit der Sicherheitstechnik vertrauten Personen bei der Anlagenautomatisierung. Zudem sind auf diese Weise Modifikationen und Erweiterungen der Anlage einfacher möglich, ohne dass schon verifizierte Anlagenteile nochmals nachverifiziert werden müssen. Zudem kommt die Modularisierung und Trennung der Sicherheitsfunktion von Standard-Funktionen den Anforderungen aktueller Sicherheitsstandards, wie den oben genannten Normen IEC 61508 und ISO 13849 in höchstem Masse entgegen.

Ein weiterer Vorteil für den Anwender ergibt sich in der Möglichkeit, die dezentralen Sicherheitsmodule gegebenenfalls netzwerkunabhängig und steuerungsunabhängig zu gestalten. Hierdurch ergibt sich auch eine Unabhängigkeit vom Anbieter der Steuerung. Das bedeutet auch, dass bei einem Wechsel der Standard-Steuerung oder des Netzwerks, etwa bedingt durch nicht sicherheitsrelevante Anforderungen bei der eingesetzten Sicherheitstechnik und den verifizierten Sicherheitsmodulen bleiben können.

Erfindungsgemäß sollen die dezentralen Sicherheitsmodule für die Sicherstellung der Gesamt-Sicherheitsfunktion miteinander zumindest in begrenztem Umfang miteinander fehlersicher kommunizieren können. Um dies unabhängig vom zugrundeliegenden physikalischen Medium zu ermöglichen, wird die Überprüfung der den Sicherheitsanforderungen gerechten Übertragung auf den empfangenden Teilnehmer übertragen. Damit entfällt ein in einigen bekannten Systemen vorgesehene Sicherheits-Master.

Für die Kommunikation der Module einer Insel, beziehungsweise einer Gruppe von Modulen zur Ausführung einer sicherheitsgerichteten Aktion werden die Telegramme an einen Kommunikations-Master gesendet und dort an den Empfänger geroutet. Das automatische Routing des Datenflusses wird realisiert, indem die fehlersicheren Kommunikationsprotokolle und/oder die fehlersicheren Kommunikationsteilnehmer Informationen oder Mittel zur Verfügung stellen, welche von den Routing-Schichten ausgewertet werden können. Auswerten heißt hierbei, dass sich die Kopier- oder Routingtabelle in einer Initialisierungsphase eigenständig aufbauen kann, ohne dass der Anwender mittels eines Netzwerkkonfigurationstools die Adressen der Kommunikationsteilnehmer vorgeben muss. Die Mittel oder Informationen können dabei sowohl einmalig während einer Initialisierungsphase, als auch zur Laufzeit des Systems zur Verfügung gestellt und ausgewertet werden.

Die Erfindung sieht im Speziellen zur Lösung der oben genannten Aufgabe eine Automatisierungs-Anlage gemäß Anspruch 1 vor.

Vorzugsweise ist die Einrichtung für das Erstellen der Routing-Tabelle im Kommunikations-Master selbst implementiert. Es ist aber auch denkbar, dass die Routing-Tabelle von einer externen Einrichtung, beispielsweise einem zusätzlichen am Netzwerk angeschlossenen Modul erzeugt und dann an den Kommunikations-Master übermittelt wird.

Der Begriff einer Routing-Tabelle bezieht sich nicht auf eine strikte Zuordnung in tabellarischer Form. Vielmehr ist im Sinne der Erfindung unter diesem Begriff eine in beliebiger Form vorhandene Zuordnungsvorschrift zu verstehen, in welcher die Sicherheitsmodule, beziehungsweise deren Adressen entsprechend der aufzubauenden logischen Verbindungen verknüpft werden.

Eine Routing-Tabelle kann gemäß einer Ausführungsform der Erfindung in Gestalt einer Kopierliste vorliegen. Das Kopieren kann insbesondere in Form eines Kopierens vollständiger Telegramme oder deren Daten innerhalb des Anwenderprogramms oder einer Kommunikations-Firmware des Kommunikations-Masters erfolgen.

Das Merkmal eines nicht sicheren Kommunikations-Masters bedeutet, dass der Kommunikations-Master nicht selbst für eine fehlersichere Kommunikation mittels eines sicheren Netzwerkprotokolls ausgebildet sein braucht und/oder spezielle redundante Hardware aufweisen muss.

Ein großer Vorteil der Erfindung liegt unter anderem darin, dass ein zentrales Konfigurationstool, mit welchem die Sicherheitsmodule und deren sicherheitsgerichtete Aktionen konfiguriert werden, vollständig entfallen kann.

Bei sicherheitsgerichteter Kommunikation wird eine schnelle Übertragung der Daten gefordert. Hier erscheint das erfindungsgemäße Verfahren mit einem Routing über einen nicht sicheren Kommunikations-Master zunächst umständlich, da jedes Telegramm über zwei Punk-zu-Punkt Verbindungen transportiert und dabei auch noch geroutet werden muss. Es hat sich aber gezeigt, dass die Kommunikation in der Geschwindigkeit anderen Sicherheitssystemen mit einer Kommunikation über den Bus vergleichbar ist, so dass der Anforderung einer schnellen Reaktionszeit genügt wird.

Als Basis für den Datenverkehr im Kommunikationsnetzwerk kann Standard-Netzwerkkommunikation verwendet werden. Genannt seien hier unter anderem die INTERBUS-, PROFIBUS-, PROFINET-, DeviceNet-, und Ethernet IP -Systeme. Für die sichere Kommunikation zwischen den Sicherheitsmodulen können die zugehörigen sicheren Netzwerkprotokolle INTERBUS-Safety, PROFIsafe oder CIP-Safety verwendet werden. Diese fehlersicheren Netzwerkprotokolle funktionieren nach dem "Black-Channel"-Prinzip, bei welchem das fehlersichere Telegramm in ein Standard-Telegramm eingebettet wird. Ein Kommunikationsteilnehmer übernimmt dabei die Rolle des sicheren Kommunikationsmasters, z.B. mittels einer Master-Safety-Layer, oder in Form eines F-Hosts.

Die Erfindung wird nachfolgend genauer anhand der beigeschlossenen Zeichnungen erläutert. Dabei verweisen gleiche Bezugszeichen auf gleiche oder entsprechende Elemente. Es zeigen:
Fig. 1: ein schematisches Schaltbild eines Automatisierungs-Netzwerks einer automatisierten Fertigungsanlage,
Fig. 2: ein Ausführungsbeispiel einer Routing-Tabelle für das in Fig. 1 gezeigte Automatisierungs-Netzwerk,
Fig. 3 ein Ausführungsbeispiel mit Eingabe- und Ausgabemodulen.

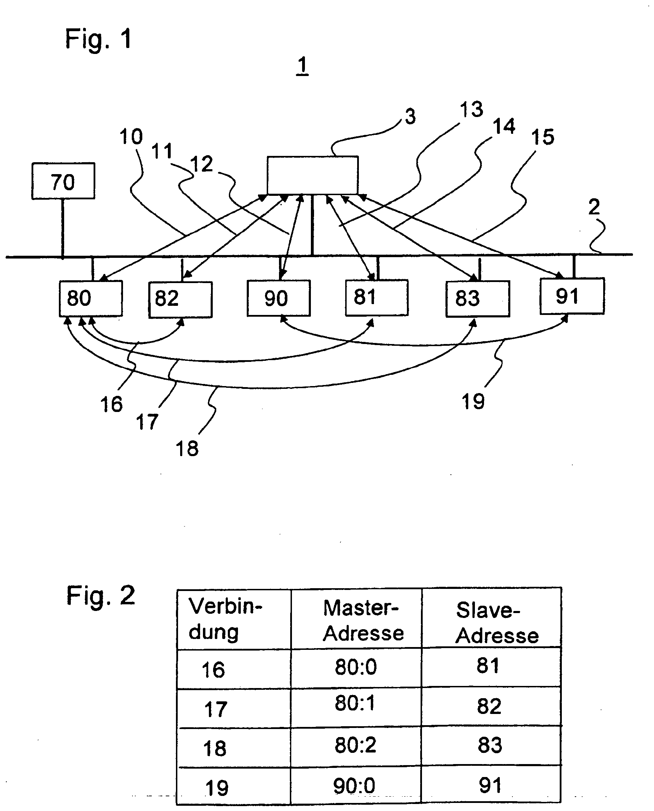

In Fig. 1 ist ein Blockschaltbild des Kommunikationsnetzwerks einer Automatisierungs-Anlage 1, vorzugsweise einer automatisierten Fertigungsanlage dargestellt.

Eine Automatisierungs-Anlage 1 gemäß der Erfindung umfasst einen Kommunikations-Master, beispielsweise als Bestandteil einer zentralen Steuerung und mehrere dezentrale Module. Im Beispiel der Fig. 1 ist ein Kommunikations-Master 3 als zentrale Steuerung oder als Bestandteil derselben vorgesehen. An das Kommunikationsnetzwerk 2 sind dezentrale Module 70, 80, 81, 82, 83, 90, 91 angeschlossen.

Die dezentralen Module 70, 80, 81, 82, 83, 90, 91 sind als Netzwerkteilnehmer ausgebildet und mit dem Kommunikations-Master 3 mittels des Kommunikationsnetzwerkes 2 vernetzt. Die Kommunikation zwischen den dezentralen Modulen 70, 80, 81, 82, 83, 90, 91 im Kommunikationsnetzwerk 2 wird über Telegramme realisiert. Beispielsweise kann das Kommunikationsnetzwerk 2 ein Ethernet-Netzwerk als physikalische Schicht aufweisen und die Kommunikation entsprechend mit Ethernet-Telegrammen realisiert werden.

Weiterhin sind mehrere der Module Sicherheitsmodule, zwischen denen sicherheitsgerichtete Daten übermittelt werden. Im Beispiel der Fig. 1 sind im Speziellen die Module 80, 81, 82, 83, 90, 91 als Sicherheitsmodule ausgebildet. Die Sicherheitsmodule bilden mehrere logische Gruppen von Modulen zur Ausführung einer sicherheitsgerichteten Funktion.

Der Kommunikationsmaster 3 hält eine Routing-Tabelle, in welcher logische Verbindungen zwischen den dezentralen Sicherheitsmodulen 80, 81, 82, 83, 90, 91 entsprechend der sicherheitsgerichteten Funktion abgelegt sind. Der Kommunikations-Master 3 ist dazu eingerichtet, gesteuert anhand der Routing-Tabelle ein automatisches Routing der Daten vom jeweiligen sendenden Sicherheitsmodul zum empfangenden Sicherheitsmodul vorzunehmen. Das empfangende Sicherheitsmodul ist dazu eingerichtet, eine sicherheitsgerichete Aktion entsprechend den empfangenden Daten auszuführen.

Der Kommunikations-Master 3 muss insbesondere selbst nicht sicher im Sinne der oben genannten Normen sein. Vielmehr kann die zentrale Steuerung eine Standard-Steuerung darstellen.

Bei dem in Fig. 1 gezeigten Beispiel existieren Punkt-zu-Punkt Verbindungen 10, 11, 12, 13, 14, 15 zwischen dem Kommunikations-Master 3 und den Sicherheitsmodulen 80, 81, 82, 83, 90, 91. In der Routing-Tabelle sind weiterhin die zur Durchführung der verschiedenen sicherheitsgerichteten Funktionen verwendeten logischen Verbindungen 16, 17, 18, 19 abgelegt. Mittels dieser Routing-Tabelle routet der Kommunikations-Master 3 die Daten, welche von den jeweils sendenden Sicherheitsmodulen versendet werden, automatisch an die zugeordneten empfangenden Sicherheitsmodule. Die mit einer logischen Verbindung verknüpften Sicherheitsmodule bilden jeweils eine logische Gruppe von Modulen zur Ausführung einer sicherheitsgerichteten Funktion. Bei dem in Fig. 1 gezeigten Beispiel wird demgemäß eine logische Gruppe mit den Sicherheitsmodulen 80, 81, 82, 83 gebildet, in welcher durch die logischen Verbindungen 16, 17, 18 die Sicherheitsmodule 81, 82, 83 jeweils mit dem Sicherheitsmodul 80 verknüpft sind. Weiterhin wird eine logische Gruppe der Sicherheitsmodule 90, 91 über die logische Verbindung 19 verknüpft.

Beispielsweise kann eines der Sicherheitsmodule die Daten einer Lichtschranke auswerten. Es kann dann etwa vorgesehen sein, dass eine Vorrichtung, deren Zugang mit der Lichtschranke überwacht wird, abzuschalten ist. Eine entsprechende Abschalt-Einrichtung wird dann von einem weiteren Sicherheitsmodul unter Ansprechen auf ein vom Sicherheitsmodul, an welchem die Lichtschranke angeschlossen ist, gesendetes und vom Kommunikations-Master 3 an das weitere Sicherheitsmodul geroutete Telegramm betätigt.

Die logischen Verbindungen sind damit aufgegliedert in jeweils zwei Punkt-zu-Punkt-Verbindungen vom und zum Kommunikations-Master 3. Beispielsweise wird die logische Verbindung 16 des in Fig. 1 gezeigten Ausführungsbeispiels durch die Punkt-zu-Punkt-Verbindungen 10 und 11 realisiert. Für die zugrundeliegende Kommunikation kann somit ein beliebiges Punkt-zu-Punkt Protokoll verwendet werden. Eine bevorzugte Basis ist ein Ethernet-Netzwerk.

Die Übermittlung der sicherheitsgerichteten Daten in Telegrammen kann insbesondere über einen nicht sicheren Kanal über das Telekommunikations-Netzwerk erfolgen. Mit anderen Worten wird das gleiche Kommunikationsmedium wie für die Standard-Daten zur Prozesssteuerung verwendet. Dies ist besonders von Vorteil, um den Hardware-Aufwand zu reduzieren und die Implementierung in bestehende Automatisierungs-Anlagen zu vereinfachen. Um hier eine hohe Verlässlichkeit in der Übertragung der sicherheitsgerichteten Daten zu erzielen, wird ein "Black-Channel"-Prinzip verwendet. Damit wird die Erkennung von Telegrammfehlern vollständig auf das empfangende Sicherheitsmodul übertragen. Demgemäß ist in dieser Weiterbildung der Erfindung zur fehlersicheren Übertragung der sicherheitsgerichteten Daten das empfangende Sicherheitsmodul zur Erkennung von Fehlern hinsichtlich einer Vertauschung, Verfälschung, Fehlleitung oder Zerstörung von Telegrammen ausgebildet.

Dazu können vom empfangenden Sicherheitsmodul bei einem empfangenen Telegramm zumindest eines der nachfolgenden Merkmale, vorzugsweise alle der nachfolgenden Merkmale überprüft werden:
- der Zeitstempel,
- Redundanz,
- eine Prüfsumme,
- eine laufende Telegrammnummer,
- eine Senderkennung
- eine Empfängerkennung.

Anhand der Sender- und Empfängerkennung der Telegramme kann insbesondere durch das empfangende Sicherheitsmodul festgestellt werden, ob die Zuordnung von Quelle und Ziel des Telegramms korrekt und eindeutig ist.

Das Prinzip des "Black Channels" geht von beliebigen Fehlern, wie Vertauschen, Zerstören und Verfälschen von Telegrammen im Kommunikationsnetzwerk 2 aus. Die fehlererkennenden Maßnahmen des verwendeten fehlersicheren Kommunikationsprotokolls für die Kommunikation zwischen den Sicherheitsmodulen nehmen dabei insbesondere keinen Kredit an den im Standard-Verkehr gegebenenfalls ebenfalls vorhandenen fehlererkennenden Massnahmen.

Eine beispielhafte Routing-Tabelle 20 für die in Fig. 1 gezeigten logischen Verbindungen ist in Fig. 2 dargestellt.

In der ersten Spalte sind die logischen Verbindungen abgelegt. Die zweite Spalte ordnet die Master-Adresse und die dritte Spalte die Slave-Adresse an. Als Master- und Slave-Adressen werden hier die Adressen des jeweiligen Ausgabe- und Eingabemoduls bezeichnet. Vorzugsweise wird ein Ausgabemodul als Master verwendet, eine umgekehrte Konfiguration ist aber ebenso möglich. Die Aufteilung in Master- und Slave-Sicherheitsmodule bezieht sich dabei insbesondere auf die fehlersichere Kommunikation. So kann der Master beispielsweise dazu eingerichtet sein, die fortlaufenden Nummern der Telegramme zu überprüfen und anhand dessen feststellen, ob die Slave-Module und die Kommunikation dieser Module mit dem Master-Sicherheitsmodul ordnungsgemäß funktioniert.

Da bei dem in Fig. 1 gezeigten Beispiel mit dem Sicherheitsmodul 80 mehrere logische Verbindungen bestehen, werden diesem Sicherheitsmodul auch mehrere Adressen in Form von Ports zugeordnet. Im Speziellen ist die Adresse 80:0 mit Port 0 für die logische Verbindung 16 zum Sicherheitsmodul 82, die Adresse 80:1 mit Port 1 für die logische Verbindung 17 zum Sicherheitsmodul 83, und die Adresse 80:2 mit Port 2 für die logische Verbindung 18 zum Sicherheitsmodul 83 zugeordnet.

Um den Aufwand bei der Initialisierung oder Projektierung der Sicherheits-Funktionen zu reduzieren, ist es weiterhin sinnvoll, wenn die zentrale Steuerung dazu eingerichtet ist, Informationen für das Erstellen einer Routing-Tabelle von den Sicherheitsmodulen abzufragen und die Routing-Tabelle anhand dieser Information zu erstellen. Entsprechend sind dabei auch die Sicherheitsmodule dazu eingerichtet, die benötigte Information zur Verfügung zu stellen.

Die sicherheitsgerichtete Kommunikation erfolgt erfindungsgemäß also jeweils über den Kommunikations-Master, wobei die sendenden Sicherheitsmodule, im Beispiel der Fig. 1 also die Sicherheitsmodule 80 und 90 immer an den Kommunikations-Master 3, beziehungsweise die zentrale Steuerung senden und von dieser Telegramme mit der erhaltenen Information dann an das Sicherheitsmodul mit der in der Routing-Tabelle definierten Zieladresse gesendet werden. Dies bietet den Vorteil, dass weder die sendenden noch die empfangenden Sicherheitsmodule Informationen benötigen, welches andere Sicherheitsmodul diesem zur Durchführung einer sicherheitsgerichteten Funktion innerhalb einer logischen Gruppe zugeordnet ist.

Eine Möglichkeit der Initialisierung der nicht sicheren zentralen Steuerung in Bezug auf die Erstellung der Routing-Tabelle ist wie folgt:
- Zunächst wird die angeschlossene Netzwerkkonfiguration ermittelt.
- Dann erfolgt eine Ermittlung der Adressen, beziehungsweise allgemeiner von Identifikations-Information der angeschlossenen Sicherheitsmodul.
- Gegebenenfalls wird eine Plausibilitätsprüfung vorgenommen.
- Anhand der Information aus den ersten beiden Schritten wird eine Anweisungs- oder Kopierliste für das Telegrammrouting im zyklischen Betrieb vorgenommen.

Als Identifikations-Information des Sicherheitsmoduls zur automatischen Erstellung der Routingtabelle oder Kopierliste kann insbesondere verwendet werden:
- ein Identifikations-Code,
- eine Geräte-ID,
- ein Geräte-Name,
- eine Sicherheits-Adresse, die beispielsweise am Sicherheitsmodul auch mittels Schalter einstellbar sein kann.

Generell kann die Initialisierung mittels eines im Kommunikations-Master implementierten Algorithmus damit wie folgt ablaufen: Zuerst erkennt der Algorithmus im Netzwerk die Sicherheitsmodule, beispielsweise an ihren ID-Codes und liest dann aus diesen Modulen die Sicherheitsadressen aus. Nun kann anhand der Sicherheitsadressen erkannt werden, dass ein automatisches Routen innerhalb der Inseln oder logischen Gruppen, also bei dem Beispiel nach Fig. 1 zwischen den Modulen 80 - 83 einerseits und den Modulen 90, 91 andererseits erfolgen soll. Es werden Referenzen oder Kopieraufträge entsprechend den logischen Verbindungen 16 bis 18 innerhalb der ersten Insel und eine Referenz oder Kopierauftrag gemäß der logischen Verbindung 19 der zweiten Insel hergestellt.

Eine Zuordnung der Sicherheitsmodule kann gemäß einer weiteren Ausführungsform der Erfindung auch über die Einstellung einer Adressinformation des Kommunikations-Masters an den Sicherheitsmodulen erfolgen. Dies ist dann günstig, wenn mehrere Kommunikations-Master 3 im Kommunikations-Netzwerk vorhanden sind und jedem Kommunikations-Master 3 eine Insel, beziehungsweise eine logische Gruppe von Sicherheitsmodulen werden soll.

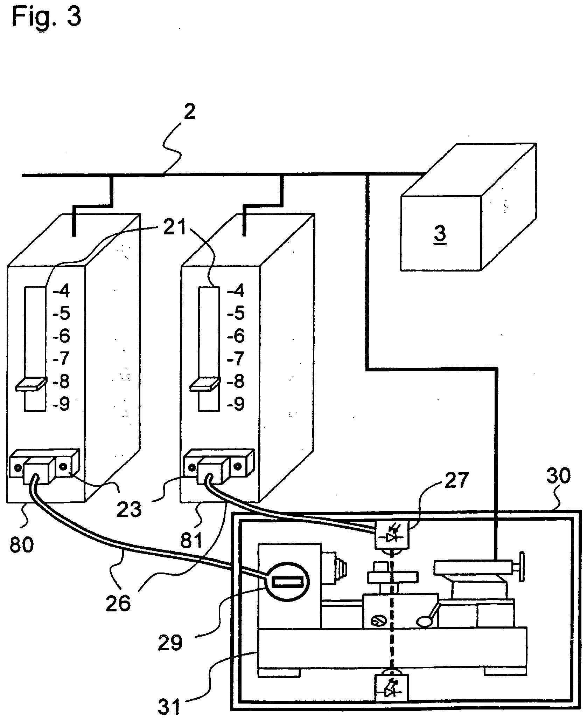

Übertragen auf das in Fig. 3 gezeigte Beispiel hat in diesem Fall beispielsweise der Kommunikations-Master 3 die Nummer 8 oder eine entsprechende Adresse. Diese wird an den Adress-Wahlschaltern 21 der Sicherheitsmodule 80, 81 eingestellt. Der Kommunikations-Master 3 fragt dann in der Initialisierungsphase die an den Sicherheitsmodulen eingestellten Nummern, beziehungsweise die entsprechenden Adressen ab und erkennt so, dass die Module 80, 81 ihm zugeordnet sind und eine logische Gruppe zur Ausführung einer Sicherheitsfunktion bilden sollen.

Die Anweisungs- oder Kopierliste stellt dabei eine mögliche Form einer Routingtabelle dar. Das Weiterleiten der Information an das empfangende Sicherheitsmodul kann gemäß einer Ausführungsform der Erfindung durch Kopieren der kompletten Telegramme im Anwenderprogramm oder innerhalb der Kommunikationsfirmware des Kommunikations-Masters 3 erfolgen. Hierfür können Kopierlisten (Tabellen, etc.) aufgebaut werden, die dann im zyklischen Betrieb abgearbeitet werden.

Ob die im Kommunikations-Master gehaltene Routing-Tabelle korrekt ist und damit auch, ob die Nachrichten an die richtigen Teilnehmer geroutet werden, kann ebenfalls durch das jeweils empfangende Sicherheitsmodul mittels des fehlersicheren Netzwerkprotokolls ermittelt werden.

Die Kopierlisten enthalten für die Kopieraufträge vorzugsweise immer eine Quelladresse (Quellzeiger), eine Zieladresse (Zielzeiger) und die Länge der zu kopierenden Daten.

Beim automatischen Erstellen der Routing-Tabelle, wie sie beispielhaft in Fig. 2 dargestellt ist, ist es wichtig, dass keine überflüssigen oder gar falschen Verbindungen, beziehungsweise dass nur richtige Verbindungen eingetragen werden. Falsche Verbindungen wären etwa solche zwischen Sicherheitsmodulen verschiedener logischer Gruppen. Dies könnte dazu führen, dass ein Signal eines Not-Aus-Schalters für eine Maschine eine andere Maschine ausgeschaltet wird.

Um die richtige Zuordnung der zu einer logischen Gruppe von Sicherheitsmodulen gehörenden Verbindungen beim Aufbau der Routing-Tabelle zu treffen, ist der Kommunikations-Master 3 in Weiterbildung der Erfindung dazu eingerichtet, Informationen der am Kommunikations-Netzwerk angeschlossenen Sicherheitsmodule abzufragen und anhand der abgefragten Information festzustellen, welche der Sicherheitsmodule zu einer logischen Gruppe gehören und in der Routing-Tabelle die Verbindungen entsprechend der Zuordnung der Sicherheitsmodule vorzunehmen.

Hierzu ergeben sich mehrere Möglichkeiten. Eine einfache Möglichkeit besteht darin, die Adress-Information der Sicherheitsmodule auszuwerten. Erfindungsgemäß sind die Adressen der Sicherheitsmodule so konfiguriert, dass diese jeweils bereits die Zusammengehörigkeit zu einer logischen Gruppe reflektieren, beziehungsweise. Bei dem in Fig. 1 dargestellten Beispiel können die Sicherheitsmodule beispielsweise Adressen entsprechend den zugeordneten Bezugszeichen aufweisen. So kann der Kommunikations-Master dazu eingerichet sein, in der Routing-Tabelle logische Gruppen entsprechend den Adressräumen 50-59, 60-69, 70-79, 80-89, 90-99, etc. durch entsprechende Verbindungseinträge abzubilden.

Wie anhand von Fig. 1 ersichtlich ist, weisen beispielsweise die Module der einen logischen Gruppe alle eine Adresse im Adressraum 80 bis 89, die Sicherheitsmodule der weiteren logischen Gruppe Adressen im Adressraum 90 - 99 auf. Entsprechend werden in der Routing-Tabelle dann Verbindungen zwischen den Modulen 80, 81, 82, 83 einerseits und eine Verbindung zwischen den Modulen 90 und 91 andererseits eingetragen.

Zur Realisierung vieler Sicherheitsfunktionen, wie beispielsweise der Ausgabe eines Ausschalt-Signals unter Ansprechen auf ein Eingangssignal ist es sinnvoll, wenn von den Sicherheitsmodulen einer Gruppe mindestens ein Sicherheitsmodul ein Eingabemodul und mindestens ein Sicherheitsmodul ein Ausgabemodul umfasst. Das Eingabemodul sendet dann über eine logische Verbindung mit den beiden Punkt-zu-Punkt Verbindungen unter Beteiligung des Kommunikations-Masters ein Telegramm an das Ausgabemodul, welches dann unter Ansprechen auf das Telegramm eine sicherheitsgerichtete Aktion auslöst.

Um nun beispielsweise bei der Installation der Automatisierungs-Anlage die zu einer logischen Gruppe zusammengehörigen Sicherheitsmodule zu kennzeichnen, können die Sicherheitsmodule mit einem Adress-Wählschalter versehen sein. Geeignet sind beispielsweise am Gehäuse angebrachte Dip-Schalter.

Die so eingestellte oder auf andere Weise für die sichere Kommunikation festgelegte Adresse muss nicht mit der generellen Netzwerkadresse identisch sein. Vielmehr kann es sich hier um eine spezielle Safety-Adresse handeln. Wie weiter unten anhand von Fig. 3 beispielhaft erläutert wird, kann die Vergabe der Sicherheits-Adresse oder auch einer anderen individuellen Adressinformation so erfolgen, dass ein im Kommunikations-Master implementierter Algorithmus die Zugehörigkeit von Sicherheitsmodule zu einer logischen Gruppe erkennt und die Routing-Tabelle entsprechend unter Eintrag einer Verbindung dieser Sicherheitsmodule aufbaut. Ein Ausführungsbeispiel mit Sicherheitsmodulen in Form von Eingabe- und Ausgabemodulen zeigt dazu Fig. 3.

Von der logischen Gruppe der Sicherheitsmodule 80, 81, 82 und 83 des in Fig. 1 gezeigten Beispiels sind der Einfachheit halber nur die Sicherheitsmodule 80 und 81 dargestellt. Das Sicherheitsmodul 80 ist ein Ausgabemodul und empfängt Nachrichten vom sendenden Sicherheitsmodul 81, das als Eingabemodul ausgebildet ist.

Beide Sicherheitsmodule 80, 81 weisen einen Anschluss 23 zur Verbindung mit Sensoren, beziehungsweise Aktoren auf. Das Sicherheitsmodul 81 als Eingabemodul ist dabei mit einem Sensor 27 und das Sicherheitsmodul 80 als Ausgabemodul mit einem Aktor 29 jeweils über ein Kabel 26 verbunden. Bei dem in Fig. 3 gezeigten Beispiel ist der Sensor 27 der Sensor einer Lichtschranke 30. Der Aktor 29 ist in diesem Beispiel ein Sicherheitsrelais, welches eine vom Automatisierungs-Netzwerk gesteuerten Maschine 31, beispielsweise einer Drehbank abschaltet.

Die sicherheitsgerichtete Aktion ist in diesem Beispiel demgemäß das automatische Abschalten der Maschine 31 im Falle dass die Lichtschranke 30 unterbrochen wird. Damit soll sichergestellt werden, dass sich Personen der laufenden Maschine 31 nicht nähern und sich in Gefahr bringen können.

Kommt es zu einer Unterbrechung der Lichtschranke 30 wird dann ausgelöst durch das Signal des Sensors 27 vom Sicherheitsmodul 81 ein Telegramm an den Kommunikations-Master 3 gesendet. Dieser bestimmt anhand seiner Routing-Tabelle, dass das Telegramm an das Sicherheitsmodul 80 weiterzuleiten ist und routet das Telegramm entsprechend. Das empfangende Sicherheitsmodul 80 aktiviert unter Ansprechen auf die im Telegramm enthaltene Information über das Auslösen der Lichtschranke über den Anschluss 23 den Aktor 29, beziehungsweise hier speziell einen Aktor 29 in Form eines Relais, welches unter Ansprechen auf ein Signal am Anschluss 23 schaltet und damit die Maschine 31 in einen sicheren Zustand überführt.

Es soll nun ein aufwändiges Konfigurieren der sicherheitsgerichteten Aktion bei der Installation der Anlage vermieden werden. Insbesondere soll es in einfacher Weise ermöglicht werden, die einzelnen zu einer logischen Gruppe gehörenden Sicherheitsmodule mit ihren Funktionen zusammenzuschalten. In der traditionellen Sicherheitstechnik geschieht dies durch Verkabelung der einzelnen Module.

Um für eine erfindungsgemäße Automatisierungs-Anlage die Konfiguration vorzunehmen, können die Sicherheitsmodule jeweils einen Adressschalter 21 aufweisen. Die Zusammengehörigkeit der Sicherheitsmodule zu einer logischen Gruppe kann dann in einfacher Weise durch eine Adressvergabe nach einem vorbestimmten Schema erfolgen. Bei dem Beispiel gemäß Fig. 3 können mit den Adressschaltern 21 jeweils Adressräume ausgewählt werden, wobei die Zuordnung zu einer logischen Gruppe durch Auswahl des gleichen Adressraums erzielt wird. Mit den Adress-Wahlschaltern 21 können im gezeigten Beispiel die Adressräume 40-49 (Schalterstellung 4), 50-59 (Schalterstellung 5), 60-69, 70-79, 80-89 und 90-99 ausgewählt werden. Um beide Sicherheitsmodule 80 und 81 logisch zu einer Gruppe zusammenzuschalten, wurde im dargestellten Beispiel bei beiden Sicherheitsmodulen der Adressraum 80 - 89 durch Setzen des Adress-Wählschalters 21 auf Ziffer "8" ausgewählt.

In einer Initialisierungsphase werden die am Kommunikations-Netzwerk angeschlossenen Sicherheitsmodule nach ihrer Adresse abgefragt. Diese senden dann Adressinformation zurück. Anhand der erkannten Zuordnung der Sicherheitsmodule zu einer logischen Gruppe kann der Kommunikations-Master dann die Routing-Tabelle mit den entsprechenden Verknüpfungen aufbauen.

Die Adressinformation muss nicht notwendigerweise vollständig sein. Beispielsweise können die beiden Sicherheitsmodule 80, 81 den ihnen zugewiesenen Adressraum 80-89 dem Kommunikations-Master mitteilen. Dieser kann dann in einem zweiten Schritt den Sicherheitsmodulen 80, 81 eine vollständige Adresse zuweisen. Vorzugsweise werden allerdings vollständige Safety-Adressen abgefragt, wobei die per Adress-Wählschalter 21 eingestellte Adresse zusätzlich zur vollständigen Safety-Adresse vergeben wird oder Bestandteil der vollständigen Adresse ist.

Ähnlich zu der oben beschriebenen Adressvergabe kann auch beispielsweise die Einstellung der vom empfangenden Sicherheitsmodul 80 verwendeten Ports erfolgen. Hierzu können entsprechende Wählschalter vorgesehen werden, mit welchen die Ports für die Kommunikation der Sicherheitsmodule untereinander eingestellt werden. Sofern eine Zuordnung eines bestimmten Ports zu einem bestimmten Eingabemodul nicht notwendig für die Erkennung und Ausführung der sicherheitsgerichteten Aktion ist, kann die Vergabe der Port-Adressen auch in der Initialisierungsphase automatisch erfolgen.

Es ist dem Fachmann ersichtlich, dass die Erfindung nicht auf die in den Figuren gezeigten Beispiele beschränkt ist, sondern vielmehr in vielfältiger Weise im Rahmen der nachstehenden Ansprüche variiert werden kann.

## Patentansprüche

1. Automatisierungs-Anlage mit einem insbesondere nicht sicheren Kommunikations-Master (3) und mehreren dezentralen Modulen (70, 80 - 83, 90, 91), wobei
- die dezentralen Module (70, 80 - 83, 90, 91) als Netzwerkteilnehmer ausgebildet sind und
- mit dem Kommunikations-Master (3) mittels eines Kommunikationsnetzwerkes vernetzt sind, wobei
- die Kommunikation zwischen den dezentralen Modulen im Kommunikationsnetzwerk über Telegramme realisiert wird, wobei
- mehrere der Module Sicherheitsmodule sind, zwischen denen sicherheitsgerichtete Daten übermittelt werden und
- die mehrere logische Gruppen von Modulen zur Ausführung einer sicherheitsgerichteten Funktion bilden, und wobei
- der vorzugsweise nicht sichere Kommunikations-Master (3) eine Routing-Tabelle hält, in welcher logische Verbindungen zwischen den dezentralen Sicherheitsmodulen entsprechend der sicherheitsgerichteten Funktion abgelegt sind, wobei
- der Kommunikations-Master dazu eingerichtet ist, gesteuert anhand der Routing-Tabelle ein automatisches Routing der Daten vom sendenden Sicherheitsmodul zum empfangenden Sicherheitsmodul vorzunehmen,
- so dass eine Kommunikation zwischen den zu einer logischen Gruppe gehörenden Sicherheitsmodulen jeweils über zwei Punkt-zu-Punkt Verbindungen, nämlich vom sendenden Sicherheitsmodul zum Kommunikations-Master (3) und weiter vom Kommunikations-Master (3) zum empfangenden Sicherheitsmodul erfolgt,
- wobei das empfangende Sicherheitsmodul dazu eingerichtet ist, eine sicherheitsgerichete Aktion entsprechend den empfangenden Daten auszuführen, und
- wobei das Kommunikationsnetzwerk eine Einrichtung aufweist, um Informationen für das Erstellen einer Routing-Tabelle von den Sicherheitsmodulen abzufragen und die Routing-Tabelle anhand dieser Information zu erstellen, **dadurch gekennzeichnet, dass**
- die Adressen der Sicherheitsmodule so konfiguriert sind, dass diese jeweils die Zusammengehörigkeit zu einer logischen Gruppe reflektieren, und
- der Kommunikations-Master (3) dazu eingerichtet ist, logische Gruppen jeweils bestimmten Adressräumen zuzuordnen.

2. Automatisierungs-Anlage gemäß vorstehendem Anspruch, wobei der Kommunikations.Master dazu eingerichtet ist, zur Initialisierung der Routing-Tabelle folgende Schritte durchzuführen:
a) Ermittlung der angeschlossenen Netzwerkkonfiguration,
b) Ermittlung von Identifikations-Information der angeschlossenen Sicherheitsmodule,
c) gegebenenfalls Durchführung einer Plausibilitätsprüfung,
d) Erstellung einer Anweisungs- oder Kopierliste für das Telegrammrouting im zyklischen Betrieb anhand der Information aus den Schritten a) und b).

3. Automatisierungs-Anlage gemäß einem der vorstehenden Ansprüche, bei welcher der Kommunikations-Master (3) dazu eingerichtet ist, Informationen der am Kommunikations-Netzwerk angeschlossenen Sicherheitsmodule abzufragen und anhand der abgefragten Information festzustellen, welche der Sicherheitsmodule zu einer logischen Gruppe gehören und in der Routing-Tabelle die Verbindungen entsprechend der Zuordnung der Sicherheitsmodule vorzunehmen.

4. Automatisierungs-Anlage gemäß einem der vorstehenden Ansprüche, wobei die Übermittlung der sicherheitsgerichteten Daten in Telegrammen über einen nicht sicheren Kanal erfolgt und zur fehlersicheren Übertragusng der sicherheitsgerichteten Daten das empfangende Sicherheitsmodul zur Erkennung von Fehlern hinsichtlich einer Vertauschung, Verfälschung, Fehlleitung oder Zerstörung von Telegrammen ausgebildet ist.

5. Automatisierungs-Anlage gemäß vorstehendem Anspruch, **dadurch gekennzeichnet, dass** vom empfangenden Sicherheitsmodul bei einem empfangenen Telegramm zumindest eines der nachfolgenden Merkmale, vorzugsweise alle der nachfolgenden Merkmale überprüft werden:
- der Zeitstempel,
- Redundanz,
- eine Prüfsumme,
- eine laufende Telegrammnummer,
- eine Senderkennung
- eine Empfängerkennung.

6. Automatisierungs-Anlage gemäß einem der vorstehenden Ansprüche, wobei von den Sicherheitsmodulen einer logischen Gruppe mindestens ein Sicherheitsmodul ein Eingabemodul und mindestens ein Sicherheitsmodul ein Ausgabemodul umfasst, wobei das Ausgabemodul eingerichtet ist, unter Ansprechen auf ein Telegramm eines Eingabemoduls eine Sicherheitsfunktion auszulösen.

## Claims

1. Automation system having an in particular non-safe communication master (3) and a plurality of local modules (70, 80-83, 90, 91), wherein
- the local modules (70, 80-83, 90, 91) are formed as network subscribers, and
- are linked with the communication master (3) by means of a communication network, wherein
- the communication between the local modules in the communication network is effected via telegrams, wherein
- a plurality of the modules are safety modules, between which safety-related data are transmitted and
- which form a plurality of logical groups of modules for performing a safety-related function, **characterised in that**
- the preferably non-safe communication master (3) maintains a routing table in which logical connections between the local safety modules are stored corresponding to the safety-related function, wherein
- the communication master is arranged to carry out automatic routing of the data from the transmitting safety module to the receiving safety module controlled using the routing table,
- so that communication between the safety modules appertaining the one logical group is effected in each case via two point-to-point connections, namely from the transmitting safety module to the communication master (3) and then from the communication master (3) to the receiving safety module,
- wherein the receiving safety module is arranged to perform a safety-related action corresponding to the receiving data, and wherein the communication network comprises a device to retrieve information from the safety modules for establishing a routing table, and to establish the routing table using this information,
**characterized in that**
the addresses of the safety modules are configured such that in each case they reflect the collective allocation to a logical group and the communication master (3) is arranged to allocate logical groups to specific address spaces in each case.

2. Automation system as claimed in the preceding Claim, wherein the communication master (3) is arranged to perform the following steps to initialise the routing table:
a) Determining the connected network configuration,
b) Determining identification information of the connected safety modules,
c) Performing a plausibility check, if applicable,
d) Establishing an instruction or copy list for the routing of telegrams in cyclic operation using the information from steps a) and b).

3. Automation system as claimed in any one of the preceding Claims, wherein the communication master (3) is arranged to retrieve information of the safety modules connected to the communication network, and to determine, using the retrieved information, which of the safety modules appertain to a logical group, and to implement the connections in the routing table corresponding to the allocation of the safety modules.

4. Automation system as claimed in any one of the preceding Claims, wherein the safety-related data are transmitted in telegrams via a non-safe channel, and for error-proof transfer of the safety-related data, the receiving safety module is formed to recognise errors with regard to permutation, corruption, misrouting or deterioration of telegrams.

5. Automation system as claimed in the preceding Claims, **characterised in that** the receiving safety module checks a received telegram for at least one of the following characteristics, preferably all of the following characteristics:
- the time stamp,
- redundancy,
- a check sum,
- a sequential telegram number,
- a transmitter identifier,
- a receiver identifier.

6. Automation system as claimed in any one of the preceding Claims, wherein out of the safety modules of a logical group at least one safety module includes an input module and at least one safety module includes an output module, wherein the output module is arranged to initiate a safety function in response to a telegram from an input module.

## Revendications

1. Installation d'automatisation comprenant un maître de communication (3) non sûr et plusieurs modules (70, 80 - 83, 90, 91) décentralisés,
- les modules (70, 80 - 83, 90, 91) décentralisés étant conçus sous forme d'abonnés de réseau et
- étant interconnectés avec le maître de communication (3) au moyen d'un réseau de communication,
- la communication entre les modules décentralisés dans le réseau de communication étant réalisée par des télégrammes,
- plusieurs des modules étant des modules de sécurité, entre lesquels des données axées sur la sécurité sont transmises et
- qui forment plusieurs des groupes logique de modules pour l'exécution d'une fonction axée sur la sécurité,
- le maître de communication (3) de préférence non sûr contient un tableau de routage dans lequel sont déposées des liaisons logiques entre les modules de sécurité décentralisés conformément à la fonction axée sur la sécurité,
- le maître de communication étant aménagé pour effectuer un routage automatique des données depuis le module de sécurité émetteur vers le module de sécurité récepteur de façon contrôlée à l'aide du tableau de routage,
- de sorte qu'une communication entre les modules de sécurité appartenant à un groupe logique s'effectue respectivement au moyen de deux liaisons de point à point, c'est-à-dire depuis le module de sécurité émetteurvers le maître de communication (3) et également depuis le maître de communication (3) vers le module de sécurité récepteur,
- le module de sécurité récepteur étant équipé pour exécuter une action axée sur la sécurité en fonction des données émettrices, et
- le réseau de communication présentant un dispositif pour interroger des informations pour l'élaboration d'un tableau de routage à partir des modules de sécurité et élaborer le tableau de routage à l'aide de cette information,
**caractérisée en ce que**
- les adresses des modules de sécurité sont configurées de telle sorte que celles-ci reflètent à chaque fois l'appartenance à un groupe logique et le maître de communication (3) est équipé pour attribuer des groupes logiques à chaque fois à des espaces d'adresse déterminés

2. Installation d'automatisation selon la revendication précédente, sur laquelle le maître de communication est équipé pour effectuer les étapes suivantes pour l'initialisation du tableau de routage :
a) détermination de la configuration de réseau raccordée,
b) détermination d'information d'identification des modules de sécurité raccordés,
c) éventuellement exécution d'un contrôle de ressemblance,
d) élaboration d'une liste d'instructions ou liste à copier pour le routage de télégrammes dans le mode cyclique à l'aide de l'information provenant des étapes a) et b).

3. Installation d'automatisation selon l'une des revendications précédentes, sur laquelle le maître de communication (3) est équipé pour interroger des informations des modules de sécurité raccordés au réseau de communication et déterminer à l'aide des informations demandées lesquels des modules de sécurité font partie d'un groupe logique et effectuer dans le tableau de routage les liaisons en fonction de l'attribution des modules de sécurité.

4. Installation d'automatisation selon l'une des revendications précédentes, la transmission des données axées sur la sécurité s'effectuant dans des télégrammes au moyen d'un canal non sûr et, pour la transmission sans erreur des données axées sur la sécurité, le module de sécurité récepteur étant conçu pour la détection d'erreursen ce qui concerne une interversion, une falsification, un acheminement erroné ou une destruction de télégrammes.

5. Installation d'automatisation selon la revendication précédente, **caractérisée en ce que** le module de sécurité récepteur contrôle dans le cas d'un télégramme reçu au moins l'une des caractéristiques suivantes, de préférence toutes les caractéristiques suivantes :
- le chronotimbre,
- la redondance,
- une somme test,
- un numéro de télégramme courant,
- un code émetteur,
- un code récepteur.

6. Installation d'automatisation selon l'une des revendications précédentes, au moins un module de sécurité comprenant un module d'entrée et au moins un module de sécurité comprenant un module de sortie parmi les modules de sécurité d'un groupe logique, le module de sortie étant équipé pour déclencher une fonction de sécurité en réaction à un télégramme d'un module d'entrée.
